# EUROPÄISCHE PATENTSCHRIFT

(11) **EP 2 394 198 B1**
(45) Veröffentlichungstag und Bekanntmachung des Hinweises auf die Patenterteilung: **18.04.2018**
(21) Anmeldenummer: 10703011.6
(22) Anmeldetag: 02.02.2010
(51) Int. Cl.: G03B 9/08, G03B 9/22

(54) **ZENTRALVERSCHLUSS**
CENTRAL SHUTTER
OBTURATEUR CENTRAL

(30) Priorität: 05.02.2009 DE 202009009522 U; 07.05.2009 DE 102009020287
(43) Veröffentlichungstag der Anmeldung: 14.12.2011
(73) Patentinhaber: Leica Camera AG, 35578 Wetzlar (DE)
(72) Erfinder: AAB, Konstantin, 34295 Edermünde-Grifte (DE)
(74) Vertreter: Stamer, Harald
(86) Internationale Anmeldenummer: PCT/EP2010/000606
(87) Internationale Veröffentlichungsnummer: WO 2010/089076

(56) Entgegenhaltungen:
- DE-A1- 2 251 758
- DE-A1- 19 906 319
- GB-A- 884 180
- GB-A- 1 036 974
- JP-A- 2003 005 252
- US-A- 2 269 400
- US-A- 3 164 077
- US-A- 3 257 921
- US-A- 6 092 936
- US-A1- 2003 161 625

## Beschreibung

Die Erfindung betrifft einen Zentralverschluß für Kamera-Objektive mit einem ringförmigen Lamellenträger, auf dem mindestens zwei kreissymmetrisch zueinander angeordnete ortsfeste Zapfen angeordnet sind, auf denen sichelförmige Verschlußlamellen schwenkbar gelagert sind.

Aus AT 254 689 B ist ein selbstspannender Zentralverschluß für fotografische Zwecke bekannt, bei dem eine Grundplatte eine zentrale Lichtdurchgangsöffnung enthält. An der Grundplatte sind zwei Verschlußlamellen um diametral zueinander liegende ortsfeste Zapfen schwenkbar gelagert. Zum Verschwenken der Verschlußlamellen aus der Schließ- in die Offenstellung und umgekehrt ist ein Lamellenbetätigungsteil vorgesehen, der als Antriebsring ausgebildet ist. Der Antriebsring ist um einen die Lichtdurchtrittsöffnung umgebenden Flansch der Grundplatte drehbar gelagert. Er besitzt einander diametral gegenüber liegende Arme, die mit fest in ihnen sitzenden Bolzen in Schlitze in den Verschlußlamellen eingreifen. Die Schlitze verlaufen radial zu den Zapfen, um die die Verschlußlamellen schwenkbar sind. Die Bolzen sind in kreisbogenförmigen Schlitzen in der Grundplatte geführt.

Zum Verdrehen des Antriebsringes dient ein Hebelgetriebe, das einen Treibhebel aufweist. Der Treibhebel ist um eine in der Grundplatte sitzende Drehachse gelagert und durch eine Zugfeder belastet. Der Treibhebel bildet zusammen mit einem Schwinghebel ein Kniehebelpaar. Der Schwinghebel ist schwenkbar an den Antriebsring angelenkt. Mit dem Treibhebel gekoppelt ist ein Spann- und Auslösehebel.

Beim Spannen wird die am Treibhebel befestigte Zugfeder gespannt und der am Antriebsring befestigte Schwinghebel zieht die Verschlußlamellen in die Offenstellung. Beim Auslösen wird der Treibhebel durch Federspannung zurückgezogen und der Schwinghebel dreht den Antriebsring zurück in die Schließstellung.

Der mechanische Aufwand an Teilen ist groß und die Vielzahl von Lager- und Führungselementen erhöht die Gefahr des Verschleißens und Schwingens der beschleunigten Teile. Die erreichbaren kurzen Öffnungszeiten sind nicht befriedigend.

Aus DE 2 251 758 ist ein fotografischer Zentralverschluß bekannt, bei dem auf einem Lamellentragring kreissymmetrisch verteilt mehrere Boizen ais Drehlager für die Verschlußlamellen angeordnet sind. Die Verschlußlamellen enthalten jeweils ein in radialer Richtung vom Drehlager beabstandetes Loch, in das jeweils ein auf einem Antriebsring befestigter Bolzen eingreift. Über ein motorisch angetriebenes Hebelwerk kann der Antriebsring vor- und zurückgestellt werden, wodurch die Verschlußlamellen in die Verschlußöffnung hinein und aus dieser heraus bewegt werden.

Zum Öffnen und Schließen des Zentralverschlusses muß die Drehrichtung des Antriebsmotors umgeschaltet werden. Die dabei notwendigerweise entstehenden Totzeiten begrenzen die erreichbaren kurzen Öffnungszeiten. Für eine schnell beschleunigte Drehung des Antriebsringes sind kräftige Motoren mit einem entsprechenden Energiebedarf notwendig. Die bei der Beschleunigung der Verschlußlamellen auf die Antriebslöcher einwirkenden Kräfte sind groß und führen zu einem frühen Verschleiß und zu relativ lauten Geräuschen.

Ein weiterer Zentralverschluss ist in dem Schriftstück GB1036974A gezeigt.

Der Erfindung lag daher die Aufgabe zugrunde, den Bauteileaufwand zu reduzieren und damit den Bauraum zu verkleinern, den Stromverbrauch der Antriebsmotoren zu verringern und gleichzeitig die kurzen Öffnungszeiten weiter herabzusetzen. Die Kraftübertragung beim Verschwenken der Verschlußlamellen sollte verschleiß-, geräusch- und schwingungsarm sein.

Diese Aufgabe wird bei einem Zentralverschluß der eingangs genannten Art erfindungsgemäß durch die kennzeichnenden Merkmale des Anspruchs 1 gelöst. Vorteilhafte Weiterbildungen ergeben sich aus den Merkmalen der Unteransprüche. Ein Verfahren zum Betrieb des Zentralverschlusses ergibt sich aus den Merkmalen der Ansprüche 16 und 17.

Durch die Zuordnung eines separaten, unter Federvorspannung stehenden Schwenkarmes zu jeder der Verschlußlamellen wird erreicht, daß eine motorisch erzeugte Verstellkraft nicht unmittelbar an den Verschlußlamellen angreift. Die Rückstellung der einzelnen Verschlußlamellen aus der Offenstellung in die Schließstellung erfolgt durch eine an ihr Gewicht und evtl. Reibungskräfte zwischen den Flächen der Verschlußlamellen angepaßte individuelle Federkraft. Die Federkraft kann relativ gering gehalten werden, so daß bei der Rückstellung eine gedämpfte Anlage an dem Anschlag der Schwenkarme erfolgt. Das reduziert die Verschlußgeräusche und verringert die Gefahr von Schwingungen. Die Federkraft kann an die gewünschten Verschlußzeiten angepaßt werden. Die Dämpfung kann beim Anschlag durch die Formgebung und Materialwahl für den Schwenkarm optimiert werden.

Zweckmäßigerweise kann der Schwenkarm als rahmenförmiger Steg ausgebildet werden, der mit der Verschlußlamellenfläche so verbunden ist, daß der Steg beim Anschlag als Dämpfungsfeder wirkt. Eine flächige Verbindung des Schwenkarmes mit der Verschlußlamelle sorgt für eine größere Übertragungsfläche für die auf die Verschlußlamelle einwirkenden Beschleunigungskräfte und stabilisiert die Fläche der dünnen Verschlußlamelle.

Ein wesentliches Erfindungselement ist die Nockenscheibe als Antriebselement für das Verschwenken der Verschlußlamellen. Durch Drehen der Nockenscheibe werden die Schwenkarme von ihren Anschlägen abgehoben und gleiten über den Nockenkopf hinweg. Da die Schwenkarme in der einen Schwenkrichtung von ihrem Anschlag festgehalten werden, können sie nur in einer Richtung gegen die Federvorspannung angehoben werden. Die Verschlußspannung wird daher durch eine in einer Richtung fortlaufende Drehung der Nockenscheibe bewirkt. Dadurch entfalten jegliche Totzeiten bei der Bewegungsumkehr des Antriebs zum Öffnen und Schließen der Verschlußlamellen.

Durch die Neigung der in Drehrichtung vorderen Flanke der Nocken kann die Geschwindigkeit der Verschlußöffnung bei gleicher Drehgeschwindigkeit der Nockenscheibe beeinflußt werden. Der Nockenabstand und die Drehgeschwindigkeit der Nockenscheibe beeinflussen die Wiederholfrequenz der Verschlußbetätigung für Serienaufnahmen. Durch die Form des Nockenkopfes kann die Dauer der vollständigen Öffnung der Verschlußlamellen beeinflußt werden.

Die Nockenscheibe kann in direkter Wirkverbindung mit einem Antriebsmotor stehen. Die Verschlußzeiten müssen dann durch die geometrische Formgebung der Nocken und die Motorgeschwindigkeit gesteuert werden.

Die Nockenscheibe kann aber auch durch den vorangegangenen Aufbau einer Feder- oder Schubspannung für einzelne Verschlußauslösungen angetrieben werden. Dazu ist es zweckmäßig, durch eine zwischen zwei Nocken einfallende Auslöseklinke die Drehung der Nockenscheibe zunächst zu blockieren. Erst nach Herausnehmen der Auslöseklinke wird dann die Nockenscheibe gedreht, wobei die Auslöseklinke automatisch wieder zwischen die beiden in Drehrichtung nachfolgenden Nocken einfallen kann.

Durch Einfügen einer weiteren Halteklinke kann erreicht werden, daß die Nockenscheibe nach dem Herausnehmen der Auslöseklinke zunächst nur bis zum Anschlag an die Halteklinke laufen kann. Die Halteklinke wird zweckmäßigerweise so positioniert, daß bei Anschlag eines Nockens an die Halteklinke die Schwenkarme der Verschlußlamellen auf dem Nockenkopf aufliegen. Über die Zeit bis zum Herausnehmen der Halteklinke kann dann die Zeit der maximalen Verschlußöffnung gesteuert werden.

Eine vorteilhafte Weiterbildung besteht darin, koaxial zur Nockenscheibe in den Lamellenträger ein ringförmiges Zahnrad mit außen liegenden Zähnen drehbar einzufügen. Die Ringfläche des Zahnrades sollte kreissegmentförmige Öffnungen aufweisen, durch die ein an der Nockenscheibe als Zugelement angebrachtes Ringsegment hindurchragen kann.

Zwischen dem Ringsegment an der Nockenscheibe und der Ringfläche am Zahnrad kann in Drehrichtung der Nockenscheibe und des Zahnrades eine Zugfeder eingehängt sein. Bei dieser Ausbildung kann die Nockenscheibe zunächst durch die Auslöseklinke blockiert werden. Dann kann das Zahnrad motorisch gedreht werden, wodurch sich die eingehängte Zugfeder spannt. Nach dem Ausschwenken der Auslöseklinke kann die Nockenscheibe unter der Einwirkung der Zugfeder z.B. zunächst gegen die Halteklinke laufen und nach deren Ausschwenken weiter bis zu der in der Zwischenzeit wieder eingeschwenkten Auslöseklinke. Bei kurzen Verschlußzeiten kann bei entsprechender Abstimmung der Nockenform auf das Einschwenken der Halteklinke verzichtet werden.

Während dieses Bewegungsablaufs der Nockenscheibe sind die Verschlußlamellen aus der Schließstellung über die Offenstellung wieder in die Schließstellung zurück geschwenkt worden. Das Zahnrad kann dabei unabhängig von der Betätigung der Verschlußlamellen bis zu einer gewünschten Spannstellung der Zugfeder weiter gedreht werden, so daß der Verschluß sofort wieder für eine Auslösung gespannt ist. Aus Gründen einer gleichmäßigen Kraftübertragung zwischen Zahnrad und Nockenscheibe werden zweckmäßigerweise mindestens drei Zugfedern symmetrisch verteilt am Umfang der aus Zahnrad und Nockenscheibe bestehenden Antriebseinheit für die Schwenkarme der Verschlußlamellen angeordnet.

Da die gespannte Zugfeder die Nockenscheibe gegen die Federvorspannung der Schwenkarme an den Verschlußlamellen verdrehen muß, ist die Federkraft der Zugfeder entsprechend größer als die der Drehfeder der Schwenkarme zu wählen.

In der Zeichnung ist ein Ausführungsbeispiel des erfindungsgemäßen Zentralverschlusses schematisch dargestellt und wird nachfolgend anhand der Figuren näher beschrieben. Dabei zeigen:
- Fig.1: eine Aufsicht auf den Lamellenträger mit Verschlußlamellen in der Geschlossenstellung,
- Fig.2: eine Aufsicht auf den Lamellenträger mit teilweise geöffneter Verschlußöffnung,
- Fig.3: eine Aufsicht auf den Lamellenträger mit Verschlußlamellen in der Offenstellung und
- Fig.4: eine Darstellung der Rückseite des Lamellenträgers.

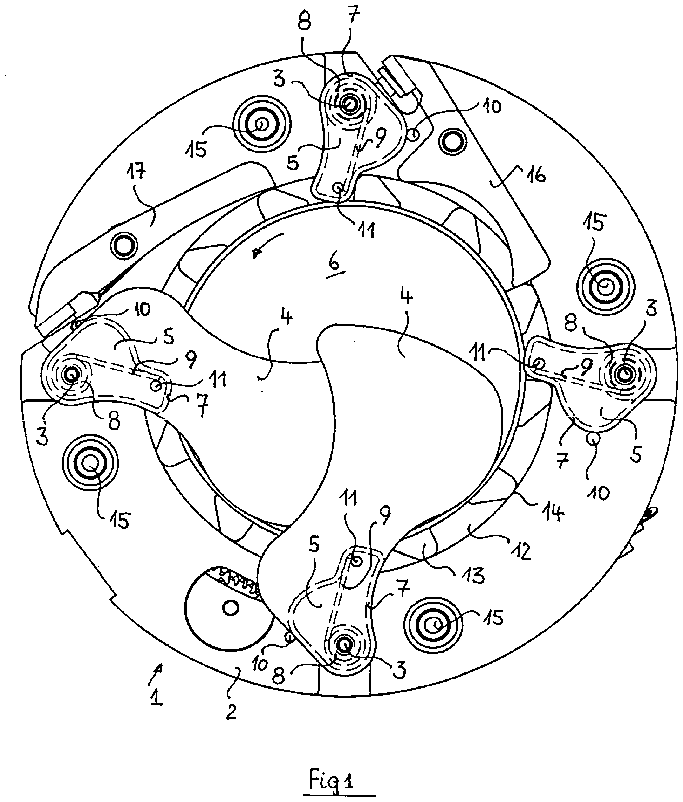

Fig. 1 zeigt in einer Aufsicht einen Zentralverschluß 1 für ein Kamera-Objektiv mit einem ringförmigen Lamellenträger 2, auf dem vier kreissymmetrisch zueinander angeordnete ortsfeste Zapfen 3 angeordnet sind. Auf den Zapfen 3 sind sichelförmige Verschlußlamellen 4 schwenkbar gelagert.

Zum Antrieb der Verschlußlamellen 4 dienen jeder Verschlußlamelle 4 separat zugeordnete Schwenkarme 5. Die Schwenkarme 5 sind ebenfalls auf den Zapfen 3 schwenkbar gelagert und weisen mit ihrem freien Arm zu Verschlußöffnung 6 hin. Die Schwenkarme 5 sind vorzugsweise topfförmig mit einem stegförmigen Rand 7 ausgebildet. In den Topf ist eine Drehfeder 8 eingelegt, die einerseits ortsfest auf die Zapfen 3 aufgesteckt ist und sich mit einem freien Federarm 9 am inneren Rand 7 des Schwenkarmes 5 abstützt. Jeder Schwenkarm 5 wird durch die Spannung der Drehfeder 8, 9 gegen einen auf dem Lamellenträger 2 angeordneten Anschlag 10 gedrückt. Der Anschlag 10 ist als Stift dargestellt. Er kann in seiner Form aber auch dem Randverlauf des Schwenkarmes 5 angepaßt und Stoß dämpfend ausgebildet sein, um Anschlaggeräusche zu unterdrücken.

Der zur Verschlußlamelle 4 weisende flache Topfboden des Schwenkarmes 5 ist mit der Verschlußlamelle 4 verbunden. Zur Ausrichtung der Verschlußlamelle 4 auf dem Schwenkarm 5 sind Nietösen 11 auf beiden Teilen vorgesehen. Wegen der Anlage der Schwenkarme 5 an den Anschlägen 10 unter Einwirkung der Drehfedern 8 können die Schwenkarme 5 nur in einer Richtung gegen den Druck der Federarme 9 der Drehfedern 8 vom Anschlag 10 weg verschwenkt werden. Dabei werden die Verschlußlamellen 4 aus der Verschlußöffnung 6 heraus bewegt. Die Anschläge 10 sind so positioniert, daß die Verschlußlamellen 4 bei Anlage der Schwenkarme 5 an den Anschlägen 10 die Verschlußöffnung 6 abdecken.

Zum Antrieb der Schwenkarme 5 ist in den Lamellenträger 2 eine ringförmige Nockenscheibe 12 drehbar eingesetzt. Auf ihrer zu den Verschlußlamellen 4 weisenden Seite ist die Nockenscheibe 12 mit radial nach außen gerichteten sägezahnförmigen Nocken 13 versehen. Die Länge der Schwenkarme 5 ist so gewählt, daß ihr freier Arm an eine Flanke der Nocken 13 anlegbar ist.

Die Drehrichtung der Nockenscheibe 12 ist durch die Anlage der Schwenkarme 5 an ihren Anschlägen 10 nur gegen den Uhrzeigersinn möglich. Die in Drehrichtung der Nockenscheibe 12 vordere Flanke der Nocken 13 ist steiler als die in Drehrichtung hintere Flanke. Der Nockenkopf 14 ist abgerundet. Im Bereich der Anlage des Schwenkarmes 5 an der vorderen Flanke des Nockens 13 ist der Rand des Schwenkarmes 5 als Kurve ausgebildet. Die Kurvenform im Zusammenwirken mit der Steilheit der vorderen Flanke der Nocke 13 erlaubt beim Drehen der Nockenscheibe 12 ein sehr schnelles Ausschwenken der Verschlußlamellen 4 aus der Verschlußöffnung 6 heraus. Um die zum Außenrand des Lamellenträgers 2 hin beschleunigte Bewegung der Verschlußlamellen 4 abfangen zu können, sind auf dem Lamellenträger 2 Pufferanschläge 15 für die Schwenkarme 5 vorgesehen.

Die Höhe der Nocken 13 und die Länge der Schwenkarme 5 sind so abgestimmt, daß bei Auflage des Schwenkarmes 5 auf dem Nockenkopf 14 die Verschlußlamellen 4 vollständig aus der Verschlußöffnung 6 ausgeschwenkt sind.

Der Antrieb der Nockenscheibe 12 in Drehrichtung kann durch später zu beschreibende primäre oder sekundäre Zug- oder Schubkräfte erfolgen.

Durch eine auf dem Lamellenträger 2 angeordnete Auslöseklinke 16 kann die Nockenscheibe 12 gegen eine Drehung gesichert werden. Die Auslöseklinke 16 ist als zweiarmiger Hebel ausgebildet, dessen eine Stirnseite zwischen zwei Nocken 13 einfallen kann. Die Auslöseklinke 16 ist dabei so positioniert, daß bei in die Verschlußöffnung 6 vollständig eingeschwenkten Verschlußlamellen 4 die Stirnseite an einer vorderen Flanke einer Nocke 13 anliegt. Das andere Hebelende der Auslöseklinke 16 ist in die Zeichenebene hinein abgewinkelt und kann von einer hier nicht dargestellten elektrisch steuerbaren Antriebsvorrichtung aus dem Bereich der Nockenscheibe 12 heraus geschwenkt werden.

Das in die Nockenscheibe 12 eingreifende Hebelende der Auslöseklinke 16 ist sichelförmig gestaltet. Nach dem Anheben der Stirnseite aus der Sperrstellung über einen Nockenkopf 14 hinweg wird das bei der Drehachse der Auslöseklinke 16 liegende Ende der Sichel geringfügig in den Bereich der Nockenscheibe 12 hinein geschwenkt, so daß eine auf dieses Ende der Sichel zulaufende Nocke 13 das stirnseitige Ende wieder in Richtung auf den Bereich zwischen zwei Nocken 13 anstoßen kann.

An dem Lamellenträger 2 ist weiterhin eine als zweiarmiger Hebel ausgebildete Halteklinke 17 schwenkbar gelagert. Auch diese Halteklinke 17 ist so gelagert, daß das eine Ende mit der Stirnseite zwischen zwei Nocken 13 einfallen kann. Das andere Hebelende der Halteklinke 17 ist in die Zeichenebene hinein abgewinkelt und kann von einem hier nicht dargestellten elektrisch steuerbaren Antrieb verstellt werden.

In der durch die Auslöseklinke 16 blockierten Stellung der Nockenscheibe 12 liegt das eine Hebelende der Halteklinke 17 auf einem Nockenkopf 14 auf. Nach dem Ausschwenken der Auslöseklinke 16 fällt dieses Hebelende der Halteklinke 17 in den Bereich zwischen den Nocken 13 und blockiert das Weiterdrehen der Nockenscheibe 12, sobald die vordere Flanke des ankommenden Nockens 13 gegen die Stirnseite der Halteklinke 17 läuft. Die Halteklinke 17 ist so positioniert, daß in dieser Haltestellung die Schwenkarme 5 auf einem Nockenkopf 14 aufliegen. In dieser Stellung sind die Verschlußlamellen 4 vollständig aus der Verschlußöffnung 6 heraus geschwenkt.

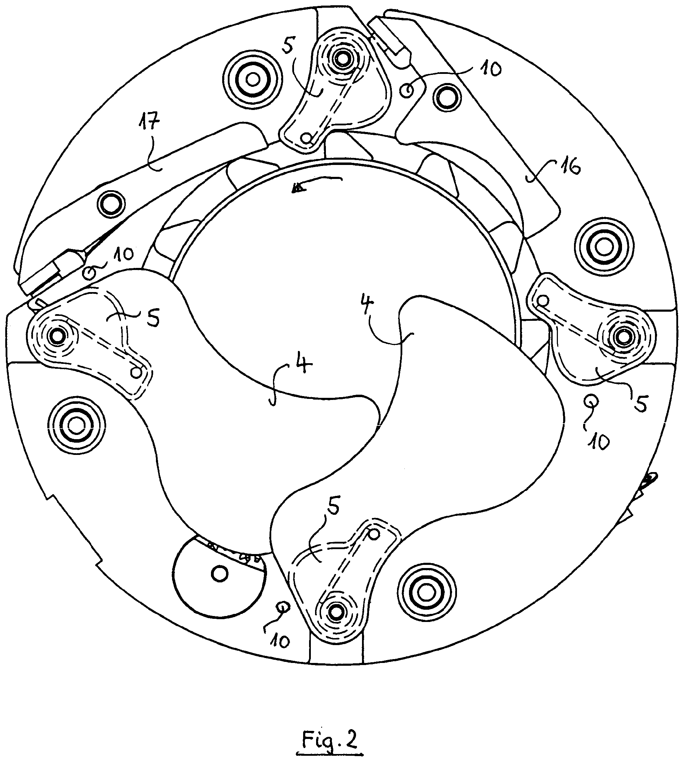

Fig. 2 zeigt die veränderte Lage der Verschlußlamellen 4 nach dem Anheben der Auslöseklinke 16. Die Schwenkarme 5 sind von den Anschlägen 10 entfernt. Die Nockenscheibe 12 ist in Drehrichtung (Pfeil) weiter gelaufen. Die Halteklinke 17 liegt auf einem Nockenkopf 14 auf.

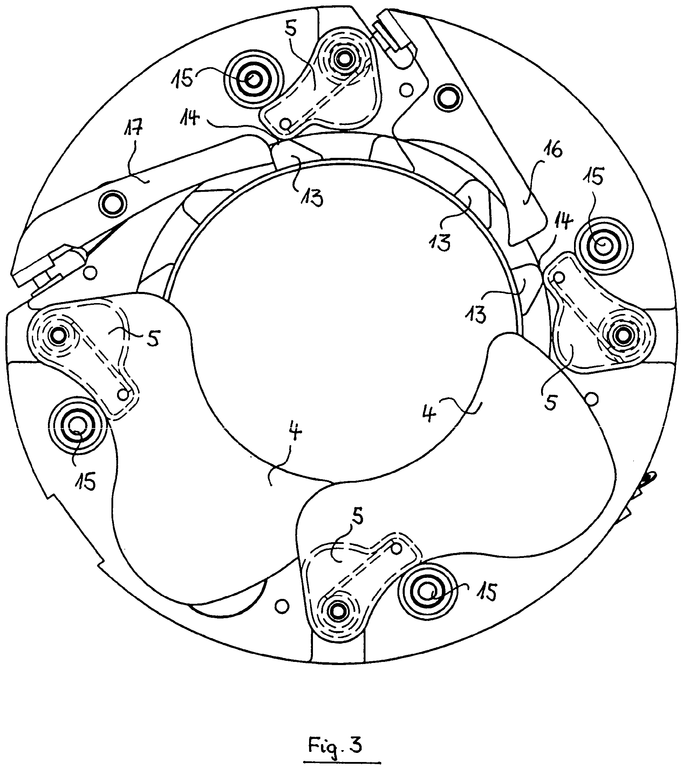

Fig. 3 zeigt die Verschlußlamellen 4 in Offenstellung. Die Schwenkarme 5 liegen an den Pufferanschlägen 15 und auf einem Nockenkopf 14 auf. Die Stirnseite der Auslöseklinke 16 taucht in den Bereich zwischen zwei Nocken 13 ein. Die Stirnseite der Halteklinke 17 blockiert die vordere Flanke eines Nockens 13.

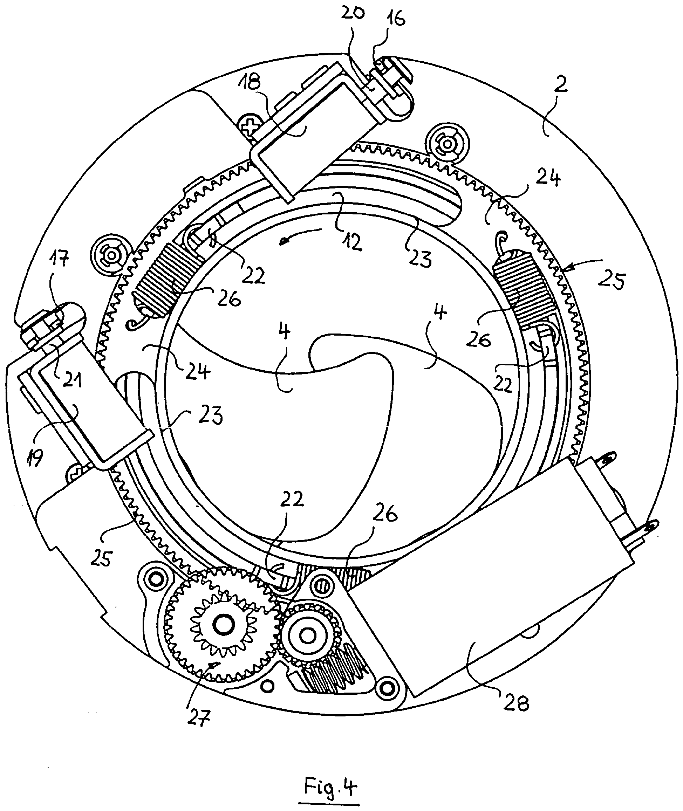

Fig. 4 zeigt die Anordnung der Antriebselemente auf der Rückseite des Lamellenträgers 2 in einer Ansicht durch den Lamellenträger 2 hindurch. Die Lage der an den abgewinkelten Enden der Auslöseklinke 16 und der Halteklinke 17 angreifenden Magnetschalter 18, 19 korrespondiert daher direkt mit der Ansicht auf die Lamellenseite. Der Stößel 20 des Magnetschalters 18 für die Auslöseklinke 16 ist ausgefahren, während der Stößel 21 des Magnetschalters 19 für die Halteklinke 17 eingezogen ist.

Die Rückseite der Nockenscheibe 12 zeigt in dieser Ansicht senkrecht zur Zeichenebene stehende Ringsegmente 22, die innerhalb einer kreissegmentförmigen Öffnung 23 in der Ringfläche 24 eines ringförmigen Zahnrades 25 angeordnet sind. In die Ringsegmente 22 sind Zugfedern 26 eingehängt, die in Drehrichtung der Nockenscheibe 12 mit ihrem anderen Ende mit der Ringfläche 24 verbunden sind.

Der außen liegende Zahnkranz des Zahnrades 25 ist über ein Zahnradgetriebe 27 mit einem Antriebsmotor 28 gekoppelt. Ausgehend von der in Fig. 1 dargestellten Stellung der Auslöseklinke 16 werden bei einer Drehung des Zahnrades 25 primär die Zugfedern 26 gespannt. Bei Betätigung des Magnetschalters 18 wird dessen Stößel 20 eingezogen und damit die Auslöseklinke 16 aus dem Nockenbereich heraus geschwenkt. Die Nockenscheibe 12 kann sich daher unter der sekundären Einwirkung der Zugfedern 26 in Pfeilrichtung drehen. Die Nocken 13 heben dabei die Schwenkarme 5 an, bis sie über die Nockenköpfe 14 hinweg wieder gegen ihre Anschläge 10 fallen. Ohne weitere Betätigung der Auslöseklinke 16 und der Halteklinke 17 kann bei permanenter Drehung des Zahnrades 25 der Verschlußablauf fortlaufend wiederholt werden.

Die Öffnungszeit des Zentralverschlusses 1 wird bestimmt durch die von den Nocken 13 bewirkte Anhebezeit für die Schwenkarme 5 mit den Verschlußlamellen 4 und die durch die Drehfedern 8 bewirkte Rückstellzeit für die Verschlußlamellen 4. Die Anhebezeit kann durch die Formgebung der vorderen Flanke der Nocken 13 und die Drehgeschwindigkeit der Nockenscheibe 12 beeinflußt werden. Die Rückstellzeit wird im wesentlichen durch die Federkraft der Drehfedern 8 und Reibungskräfte zwischen den sich überlappenden Verschlußlamellen 4 bestimmt. Die Drehgeschwindigkeit der Nockenscheibe 12 und die Federkraft der Drehfedern 8 sind so aufeinander abzustimmen, daß die Schwenkarme 5 zwischen dem Anheben durch aufeinander folgende Nocken 13 ausreichend Zeit haben, um bis an die Anschläge 10 zurückfallen zu können. In der Praxis konnten Öffnungszeiten kleiner 1/2000 sec realisiert werden.

Die Drehgeschwindigkeit der Nockenscheibe 12 wird durch ihre Antriebskräfte bestimmt. Im Ausführungsbeispiel werden diese sekundär durch die Zugfedern 26 erzeugt. Die Antriebskräfte wirken den Rückstellkräften der Schwenkarme 5 entgegen. Um von den Rückstellkräften unabhängig zu sein, müssen die Antriebskräfte daher ausreichend groß sein. Die Federkräfte der Zugfedern 26 sind daher wesentlich größer als die Federkräfte der Drehfedern 8. Bei der vorstehend angegebenen fortlaufenden Verschlußbetätigung entsteht dadurch praktisch eine starre Kopplung zwischen Zahnrad 25 und Nockenscheibe 12, so daß die Nockenscheibe 12 primär durch das Zahnrad 25 angetrieben wird.

Für Einzelaufnahmen wird die Auslöseklinke 16 nach jedem Start der Nockenscheibe 12 wieder zwischen die Nocken 13 eingesetzt.

Zur Steuerung längerer Öffnungszeiten kann die Halteklinke 17 eingesetzt werden.

### Bezugszeichenliste

- 1: Zentralverschluß
- 2: Lamellenträger
- 3: Zapfen
- 4: Verschlußlamellen
- 5: Schwenkarme
- 6: Verschlußöffnung
- 7: Rand
- 8: Drehfeder
- 9: Federarm
- 10: Anschlag
- 11: Nietösen
- 12: Nockenscheibe
- 13: Nocke
- 14: Nockenkopf
- 15: Pufferanschlag
- 16: Auslöseklinke
- 17: Halteklinke
- 18: Magnetschalter Auslöseklinke
- 19: Magnetschalter Haltekline
- 20: Stößel Magnetschalter Auslöseklinke
- 21: Stößel Magnetschalter Halteklinke
- 22: Ringsegment
- 23: Kreisegmentförmige Öffnung
- 24: Ringfläche
- 25: Ringförmiges Zahnrad
- 26: Zugfeder
- 27: Zahradgetriebe
- 28: Antriebsmotor

## Patentansprüche

1. Zentralverschluß (1) für Kamera-Objektive mit einem ringförmigen Lamellenträger (2), auf dem mindestens zwei kreissymmetrisch zueinander angeordnete ortsfeste Zapfen (3) angeordnet sind, auf denen sichelförmige Verschlußlamellen (4) schwenkbar gelagert sind, **dadurch gekennzeichnet, daß** jeder Verschlußlamelle (4) ein separater, zur Verschlußöffnung (6) weisender Schwenkarm (5) zugeordnet ist, der ebenfalls auf dem Zapfen (3) schwenkbar gelagert ist und bei vollständig in die Verschlußöffnung (6) eingeschwenkter Verschlußlamelle (4) unter Federspannung (8, 9) an einem auf dem Lamellenträger (2) angeordneten Anschlag (10) anliegt, wobei
der Schwenkarm (5) mit der Verschlußlamelle (4) verbunden ist und zur Erzeugung der Federspannung eine auf den Zapfen (3) aufgesetzte Drehfeder (8) vorgesehen ist und in
den Lamellenträger (2) eine ringförmige Nockenscheibe (12) drehbar eingesetzt ist, die auf ihrer zu den Verschlußlamellen (4) weisenden Seite in radialer Richtung liegende sägezahnförmige Nocken (13) aufweist und auf der dazu abgewandten Seite mindestens ein in axialer Richtung weisendes Ringsegment (22) enthält und wobei die Länge der den Verschlußlamellen (4) zugeordneten Schwenkarme (5) so gewählt ist, daß das freie Ende des Schwenkarmes (5) an eine Flanke der Nocken (13) anlegbar ist.

2. Zentralverschluß nach Anspruch 1, **dadurch gekennzeichnet, daß** die in Drehrichtung der Nockenscheibe (12) vordere Flanke der Nocken (13) steiler als die hintere Flanke ist und der Nockenkopf (14) gerundet ist.

3. Zentralverschluß nach Anspruch 1, **dadurch gekennzeichnet, daß** der Schwenkarm (5) zumindest im Bereich der Anlage an eine Flanke des Nockens (13) eine Kurvenform aufweist.

4. Zentralverschluß nach Anspruch 1, **dadurch gekennzeichnet, daß** bei in die Verschlußöffnung (6) vollständig eingeschwenkten Verschlußlamellen (4) die Schwenkarme (5) an einer vorderen Flanke eines Nockens (13) anliegen und bei vollständig aus der Verschlußöffnung (6) heraus geschwenkten Verschlußlamellen (4) die Schwenkarme (5) auf dem jeweiligen Nockenkopf (14) aufliegen.

5. Zentralverschluß nach Anspruch 1, **dadurch gekennzeichnet, daß** die Nockenscheibe (12) durch Einwirkung einer am Ringsegment (22) angreifenden Zug- oder Schubkraft in der die Schwenkarme (5) vom Anschlag (10) abhebenden Richtung drehbar ist.

6. Zentralverschluß nach Anspruch 1, **dadurch gekennzeichnet, daß** an dem Lamellenträger (2) eine als zweiarmiger Hebel ausgebildete Auslöseklinke (16) so schwenkbar gelagert ist, daß eine Stirnseite zwischen zwei Nocken (13) einfallen kann.

7. Zentralverschluß nach Anspruch 6, **dadurch gekennzeichnet, daß** die Auslöseklinke (16) so positioniert ist, daß bei in die Verschlußöffnung (6) vollständig eingeschwenkten Verschlußlamellen (4) die Stirnseite an einer vorderen Flanke einer Nocke (13) anliegt.

8. Zentralverschluß nach Anspruch 1, **dadurch gekennzeichnet, daß** an dem Lamellenträger (2) eine als zweiarmiger Hebel ausgebildete Halteklinke (17) so schwenkbar gelagert ist, daß eine Stirnseite zwischen zwei Nocken (13) einfallen kann.

9. Zentralverschluß nach Anspruch 8, **dadurch gekennzeichnet, daß** die Halteklinke (17) so positioniert ist, daß bei vollständig aus der Verschlußöffnung (6) heraus geschwenkten Verschlußlamellen (4) die Stirnseite an einer vorderen Flanke einer Nocke (13) anliegt.

10. Zentralverschluß nach Anspruch 1, **dadurch gekennzeichnet, daß** koaxial zur ringförmigen Nockenscheibe (12) in den Lamellenträger (2) ein ringförmiges Zahnrad (25) mit außen liegenden Zähnen und mindestens einer in dessen Ringfläche (24) angeordneten kreissegmentförmigen Öffnung (23) eingesetzt ist, wobei das an der Nockenscheibe (12) angeordnete Ringsegment (22) durch die Öffnung (23) hindurchragt.

11. Zentralverschluß nach Anspruch 10, **dadurch gekennzeichnet, daß** in das an der Nockenscheibe (12) angeordnete Ringsegment (22) eine Zugfeder (26) eingehängt ist, die in Drehrichtung der Nockenscheibe (12) an ihrem anderen Ende mit der Ringfläche (24) des Zahnrades (25) verbunden ist.

12. Zentralverschluß nach Anspruch 10, **dadurch gekennzeichnet, daß** an dem Lamellenträger (2) ein motorischer Antrieb (28) für das Zahnrad (25) angeordnet ist.

13. Zentralverschluß nach Anspruch 6 oder 8, **dadurch gekennzeichnet, daß** an dem Lamellenträger (2) elektrisch steuerbare Vorrichtungen (18, 19) zur Betätigung der Auslöse- (16) oder Halteklinke (17) angeordnet sind.

14. Verfahren zum Betrieb eines Zentralverschlusses mit den baulichen Merkmalen der vorangehenden Ansprüche 6 und 11, **dadurch gekennzeichnet, daß** die Auslöseklinke (16) vor einem Nocken (13) in die Nockenscheibe (12) eingesetzt wird, das Zahnrad (25) motorisch gedreht wird, dabei die Zugfeder (26) zwischen Nockenscheibe (12) und Zahnrad (25) gespannt wird und jeweils eine vordere Flanke einer Nocke (13) mit einem Schwenkarm (5) zur Anlage kommt, danach die Auslöseklinke (16) aus der Nockenscheibe (12) ausgeschwenkt wird, wobei die Nockenscheibe (12) unter Einwirkung der Zugfeder (26) gedreht wird, die Schwenkarme (5) über den jeweiligen Nockenkopf (14) hinweg angehoben werden und die Schwenkarme (5) danach unter Einwirkung ihrer Federspannung hinter der jeweiligen Nocke (13) gegen ihre Anschläge (10) fallen.

15. Verfahren nach Anspruch 14, **dadurch gekennzeichnet, daß** zusätzlich die Halteklinke (17) in die Nockenscheibe (12) eingesetzt wird, so daß nach dem Ausschwenken der Auslöseklinke (16) zunächst ein Nocken (13) an der Halteklinke (17) zur Anlage kommt und die Schwenkarme (5) auf den jeweiligen Nockenköpfen (14) aufliegen bleiben bis auch die Halteklinke (17) aus der Nockenscheibe (12) ausgeschwenkt wird.

## Claims

1. Central shutter (1) for camera objectives, with an annular leaf carrier (2) on which at least two fixed studs (3) are arranged in a circularly symmetrical manner in relation to each other, on which studs (3) sickle-shaped shutter leaves (4) are pivotably mounted, **characterized in that** each shutter leaf (4) is assigned a separate pivot arm (5) which faces towards the shutter opening (6) and which is likewise pivotably mounted on the stud (3) and, when the shutter leaf (4) is fully pivoted into the shutter opening (6), bears with spring tension (8, 9) on a stop (10) arranged on the leaf carrier (2), wherein the pivot arm (5) is connected to the shutter leaf (4) and, in order to generate the spring tension, a torsion spring (8) is provided which is mounted on the stud (3), and an annular cam plate (12) is inserted rotatably into the leaf carrier (2), which cam plate (12) has sawtooth-shaped cams (13) lying in the radial direction on its side facing towards the shutter leaves (4) and, on the side remote from the cams (13), contains at least one ring segment (22) facing in the axial direction, and wherein the length of the pivot arms (5) assigned to the shutter leaves (4) is chosen such that the free end of the pivot arm (5) can be placed onto a flank of the cams (13).

2. Central shutter according to Claim 1, **characterized in that** the front flank of the cams (13), in the rotation direction of the cam plate (12), is steeper than the rear flank, and the cam head (14) is rounded.

3. Central shutter according to Claim 1, **characterized in that** the pivot arm (5) has a curved shape at least in the region bearing on a flank of the cam (13).

4. Central shutter according to Claim 1, **characterized in that**, when the shutter leaves (4) are pivoted fully into the shutter opening (6), the pivot arms (5) bear on a front flank of a cam (13) and, when the shutter leaves (4) are pivoted fully out of the shutter opening (6), the pivot arms (5) bear on the respective cam head (14).

5. Central shutter according to Claim 1, **characterized in that** the cam plate (12) is rotatable, in the direction lifting the pivot arms (5) from the stop (10), by the action of a tensile force or shearing force acting on the ring segment (22).

6. Central shutter according to Claim 1, **characterized in that** a release pawl (16) designed as a two-armed lever is mounted pivotably on the leaf carrier (2) such that an end face can fall between two cams (13).

7. Central shutter according to Claim 6, **characterized in that** the release pawl (16) is positioned such that the end face bears on a front flank of a cam (13) when the shutter leaves (4) are pivoted fully into the shutter opening (6).

8. Central shutter according to Claim 1, **characterized in that** a retention pawl (17) designed as a two-armed lever is mounted pivotably on the leaf carrier (2) such that an end face can fall between two cams (13).

9. Central shutter according to Claim 8, **characterized in that** the retention pawl (17) is positioned such that the end face bears on a front flank of a cam (13) when the shutter leaves (4) are pivoted fully out of the shutter opening (6).

10. Central shutter according to Claim 1, **characterized in that**, coaxially with respect to the annular cam plate (12), an annular toothed wheel (25) is inserted into the leaf carrier (2), with external teeth and with at least one circular segment-shaped opening (23) arranged in its ring surface (24), wherein the ring segment (22) arranged on the cam plate (12) protrudes through the opening (23).

11. Central shutter according to Claim 10, **characterized in that** a tension spring (26) is suspended in the ring segment (22) arranged on the cam plate (12) and, in the rotation direction of the cam plate (12), is connected at its other end to the ring surface (24) of the toothed wheel (25).

12. Central shutter according to Claim 10, **characterized in that** a motor drive (28) for the toothed wheel (25) is arranged on the leaf carrier (2).

13. Central shutter according to Claim 6 or 8, **characterized in that** electrically controllable devices (18, 19) for actuating the release pawl (16) or retention pawl (17) are arranged on the leaf carrier (2).

14. Method for operating a central shutter having the design features of Claims 6 and 11 above, **characterized in that** the release pawl (16) is inserted into the cam plate (12) in front of a cam (13), the toothed wheel (25) is rotated by motor, the tension spring (26) is tensioned between cam plate (12) and toothed wheel (25), and in each case a front flank of a cam (13) comes to bear on a pivot arm (5), after which the release pawl (16) is pivoted out from the cam plate (12), wherein the cam plate (12) is rotated by the action of the tension spring (26), the pivot arms (5) are lifted over the respective cam head (14), and the pivot arms (5) thereafter fall against their stops (10) behind the respective cam (13) under the effect of their spring tension.

15. Method according to Claim 14, **characterized in that** in addition the retention pawl (17) is inserted into the cam plate (12) such that, after the release pawl (16) is pivoted out, a cam (13) initially comes to bear on the retention pawl (17), and the pivot arms (5) remain lying on the respective cam heads (14) until the retention pawl (17) is also pivoted out from the cam plate (12).

## Revendications

1. Fermeture centrale (1) pour objectif de caméra, présentant un porte-lamelles (2) annulaire sur lequel sont disposés au moins deux tourillons fixes (3) agencés l'un par rapport à l'autre selon une symétrie circulaire et sur lesquels des lamelles de fermeture (4) en forme de croissant de lune sont montées à pivotement,
**caractérisée en ce que**
un bras pivotant séparé (5) orienté vers l'ouverture de fermeture (6) est associé à chaque lamelle de fermeture (4), est également monté à pivotement sur le tourillon (3) et repose sous contrainte élastique (8, 9) contre une butée (10) disposée sur le porte-lamelles (2) lorsque la lamelle de fermeture (4) a complètement pivoté dans l'ouverture de fermeture (6),
**en ce que** le bras pivotant (5) est relié à la lamelle de fermeture (4) et un ressort rotatif (8) placé sur le tourillon (3) est prévu pour exercer la contrainte élastique,
**en ce qu'**un disque annulaire (12) à cames est inséré à rotation dans le porte-lamelles (2), présente sur son côté tourné vers les lamelles de fermeture (4) des cames (13) en forme de dents de scie disposées dans la direction radiale et sur le côté opposé au moins un segment annulaire (22) orienté dans la direction axiale, la longueur des bras pivotants (5) associés aux lamelles de fermeture (4) étant sélectionnée de telle sorte que l'extrémité libre du bras pivotant (5) puisse se placer sur un flanc de came (13).

2. Fermeture centrale selon la revendication 1, **caractérisée en ce que** le flanc de la came (13) situé en avant dans le sens de rotation du disque (12) à cames est plus accusé que le flanc arrière et **en ce que** la tête (14) de la came est arrondie.

3. Fermeture centrale selon la revendication 1, **caractérisée en ce que** le bras pivotant (5) présente une forme courbe au moins au niveau de son contact avec un flanc de la came (13).

4. Fermeture centrale selon la revendication 1, **caractérisée en ce que** lorsque les lamelles de fermeture (4) ont pivoté complètement dans l'ouverture de fermeture (6), les bras pivotants (5) reposent contre un flanc avant d'une came (13) et lorsque les lamelles de fermeture (4) ont pivoté entièrement hors de l'ouverture de fermeture (6), les bras pivotants (5) reposent contre la tête (14) correspondante de la came.

5. Fermeture centrale selon la revendication 1, **caractérisée en ce que** le disque (12) à cames peut tourner dans la direction qui éloigne les bras pivotants (5) de la butée (10) par l'action d'une force de traction ou de poussée qui agit sur le segment annulaire (22).

6. Fermeture centrale selon la revendication 1, **caractérisée en ce qu'**un cliquet de déclenchement (16) configuré comme levier à deux bras est monté à pivotement sur le porte-lamelle (2) de telle sorte qu'un côté frontal puisse s'insérer entre deux cames (13).

7. Fermeture centrale selon la revendication 6, **caractérisée en ce que** le cliquet de déclenchement (16) est positionné de telle sorte que lorsque les lamelles de fermeture (4) ont pivoté complètement dans l'ouverture de fermeture (6), le côté frontal repose contre le flanc avant d'une came (13).

8. Fermeture centrale selon la revendication 1, **caractérisée en ce qu'**un cliquet de retenue (17) configuré comme levier à deux bras est monté à pivotement sur le porte-lamelle (2) de telle sorte que son côté frontal s'insère entre deux cames (13).

9. Fermeture centrale selon la revendication 8, **caractérisée en ce que** le cliquet de retenue (17) est positionné de telle sorte que lorsque les lamelles de fermeture (4) ont pivoté complètement hors de l'ouverture de fermeture (6), leur côté frontal repose contre le flanc avant d'une came (13).

10. Fermeture centrale selon la revendication 1, **caractérisée en ce qu'**une roue dentée (25) présentant des dents extérieures et au moins une ouverture (23) en forme de segment de cercle disposée dans sa surface annulaire (24) est insérée dans le porte-lamelles (2) coaxialement par rapport au disque annulaire (12) à cames, le segment annulaire (22) disposé sur le disque (12) à cames traversant l'ouverture (23).

11. Fermeture centrale selon la revendication 10, **caractérisée en ce qu'**un ressort de traction (26) qui est relié à la surface annulaire (24) de la roue dentée (25) à son autre extrémité dans le sens de rotation du disque (12) à cames est suspendu dans le segment annulaire (22) disposé sur le disque (12) à cames.

12. Fermeture centrale selon la revendication 10, **caractérisée en ce qu'**un moteur d'entraînement (28) de la roue dentée (25) est disposé sur le porte-lamelles (2).

13. Fermeture centrale selon les revendications 6 ou 8, **caractérisée en ce que** des ensembles (18, 19) commandés électriquement sont disposés sur le porte-lamelle (2) pour actionner le cliquet de déclenchement (16) ou le cliquet de retenue (17).

14. Procédé d'utilisation d'une fermeture centrale qui présente les caractéristiques structurelles des revendications 6 et 11 qui précèdent,
**caractérisé en ce que**
le cliquet de déclenchement (16) est inséré dans le disque (12) à cames en avant d'une came (13),
**en ce que** la roue dentée (25) est mise en rotation par un moteur,
**en ce qu'**ainsi le ressort de traction (26) situé entre le disque (12) à cames et la roue dentée (25) est tendu et le flanc avant d'une came (13) vient se placer contre un bras pivotant (5),
**en ce que** le cliquet de déclenchement (16) pivote ensuite hors du disque (12) à cames, le disque (12) à cames tournant sous l'action du ressort de traction (26), les bras pivotants (5) étant éloignés de la tête (14) des cames correspondantes et les bras pivotants (5) tombant ensuite contre leur butée (10) sous l'action de la contrainte élastique, en arrière de la came (13) correspondante.

15. Procédé selon la revendication 14, **caractérisé en ce que** de plus le cliquet de retenue (17) est inséré dans le disque (12) à cames de telle sorte qu'après que le cliquet de déclenchement (16) est sorti par pivotement, une came (13) vient d'abord se placer contre le cliquet de retenue (17) et les bras pivotants (5) restent contre les têtes (14) des cames associées jusqu'à ce que le cliquet de retenue (17) pivote également hors du disque (12) à cames.
